# EUROPÄISCHE PATENTSCHRIFT

(11) **EP 1 462 700 B1**
(45) Veröffentlichungstag und Bekanntmachung des Hinweises auf die Patenterteilung: **02.11.2005**
(21) Anmeldenummer: 04006100.4
(22) Anmeldetag: 15.03.2004
(51) Int. Cl.: F16L 5/04, F16L 5/02

(54) **Quetschflansch**
Compressible flange
Bride compressible

(30) Priorität: 25.03.2003 DE 10313306
(43) Veröffentlichungstag der Anmeldung: 29.09.2004
(73) Patentinhaber: Poloplast GmbH & Co. KG, 4060 Leonding (AT)
(72) Erfinder: Paier, Thomas, 3352 St. Peter in der Au (AT)
(74) Vertreter: Weber, Joachim

(56) Entgegenhaltungen:
- WO-A-97/48931
- WO-A-03/010457
- DE-U- 29 817 098
- US-A- 2 493 556

## Beschreibung

Die Erfindung bezieht sich auf einen Quetschflansch gemäß den Merkmalen des Oberbegriffs des Hauptanspruchs. Ein solcher Quetschflansch ist aus WO-A-97/48931 bekannt.

Im Einzelnen bezieht sich die Erfindung auf einen Quetschflansch mit einem im Wesentlichen ringförmigen elastischen Dichtelement sowie mit einem ersten und einem zweiten Spannelement, mittels derer das Dichtelement quetschbar ist.

Aus dem Stand der Technik sind Quetschflansche in unterschiedlichen Ausgestaltungen vorbekannt. Sie dienen zum Abdichten innerhalb einer zylindrischen Ausnehmung, beispielsweise einer Mauerdurchführung. Dabei wird das elastische Dichtelement, welches üblicherweise aus einem Gummi-Material besteht, zwischen zwei Spannelementen oder ringförmigen Flanschen zusammengequetscht. Diese Verquetschung führt zu einer radialen Verformung des Dichtelements. Dieses weicht somit nach außen aus und drückt gegen die Wandung des Rohres oder der Mauerdurchführung. Weiterhin weicht das Material des Dichtelements auch radial nach innen aus und quetscht somit ein durchgeführtes, abzudichtendes Rohr. Durch die Verpressung des Dichtelementes entsteht eine entsprechende Dichtwirkung, die beispielsweise ausreichend ist, um von außen anstehendes Wasser abzudichten.

Als nachteilig erweist es sich dabei, dass das elastische Dichtelement sich nur bis zu einem gewissen Maße in radialer Richtung deformieren lässt, so dass die gewünschte Dichtwirkung begrenzt ist. Dieses wiederum führt dazu, dass das Dichtelement möglichst passgenau zum Durchmesser des Außenrohres bzw. der Mauerdurchführung sowie zum Durchmesser des abzudichtenden Rohres hergestellt werden muss.

Als weiterer Nachteil ergibt sich, dass die Materialeigenschaften des elastischen Dichtelements dazu führen, dass dieses in seiner Dichtwirkung nachlässt, je kleiner der abzudichtende Rohrdurchmesser im Verhältnis zum Quetschflanschdurchmesser ist, so dass die erforderliche Verpressung zu gering wird, um eine ausreichende Dichtheit zu gewährleisten.

Da aus dem Stand der Technik jeweils ringförmige Spannelemente bekannt sind, welche mitunter auch aufklappbar gestaltet sein können, um das elastische, ebenfalls ringförmige Dichtelement gleichmäßig zu verpressen, führt eine ungleichmäßige Vorspannung der beiden Spannelemente zueinander zu einer ungleichmäßigen Verformung des Dichtelements. Dies wiederum bedingt die Gefahr von Undichtigkeiten.

Die vorbekannten Konstruktionen verwenden vielfach geteilte Spannelemente, die mittels mehrerer durchgehender Schrauben gegeneinander verspannt werden. Dabei sind die Schrauben dem korrodierenden Medium ausgesetzt, so dass höhere Kosten durch geeignete Materialauswahl oder Beschichtung der Schrauben entstehen. Zusätzlich kann es ungünstig sein, dass sich im Bereich der Durchführung der Schrauben selbst Undichtigkeiten ergeben können.

Der Erfindung liegt die Aufgabe zugrunde, einen Quetschflansch der eingangs genannten Art zu schaffen, welcher bei einfachem Aufbau und einfacher, kostengünstiger Herstellbarkeit ein hohes Maß an Dichtwirkung sicherstellt.

Erfindungsgemäß wird die Aufgabe durch die Merkmalskombination des Hauptanspruchs gelöst, die Unteransprüche zeigen weitere vorteilhafte Ausgestaltungen der Erfindung.

Erfindungsgemäß ist somit ein Quetschflansch vorgesehen, bei welchem ein zusätzlicher Konuskörper verwendet wird, um das Dichtelement zu quetschen und zu deformieren. Durch die konusförmige Ausgestaltung ist es möglich, bei relativ geringen Spannkräften ein hohes Maß an radial gerichteter Verformung des Dichtelementes hervorzurufen, so dass der gesamte Quetschflansch sich auch unter ungünstigen Einbaubedingungen durch eine hohe Dichtigkeit auszeichnet.

Da der Konuskörper erfindungsgemäß in dem Freiraum des Dichtelements angeordnet ist, ist das Dichtelement zu einer Seite hin vollständig geschlossen und dichtet die Mauerdurchführung oder das Rohr (Futterrohr) vollständig ab. Von dieser Seite aus können somit aggressive Medien nicht die Spannelemente sowie weitere zum Verspannen dieser beiden Spannelemente benötigte Bauelemente angreifen. Vielmehr sind diese durch das Dichtelement selbst geschützt.

Durch die erfindungsgemäß vorgesehene kreisringsegmentartige Ausgestaltung des ersten und des zweiten Spannelements kann der Quetschflansch so angeordnet werden, dass ein einfacher Zugang zu den Spannelementen gesichert ist. Dies ist insbesondere bei ungünstigen Einbauverhältnissen, beispielsweise in Ecken von Gehäusen, vorteilhaft. Hierdurch wird die Montage erheblich erleichtert.

Durch die erfindungsgemäß vorgesehene Verwendung eines Konuskörpers ergibt sich eine hervorragende radiale Verquetschung des Dichtelements, so dass auch kleine Rohrdurchmesser von durchzuführenden, abzudichtenden Rohren zuverlässig abgedichtet werden können.

Im Rahmen der erfindungsgemäßen Lösung ist es möglich, den Konuskörper entweder einstückig mit dem Dichtelement auszubilden oder als separates Bauteil einzusetzen. Bei letzter Lösung besteht auch die Möglichkeit, die Elastizität bzw. Härte des Ko-nuskörpers unterschiedlich zu der des Dichtelements auszuwählen. Auch unterschiedliche Materialpaarungen sind hierdurch möglich.

Das Dichtelement ist erfindungsgemäß bevorzugter Weise an seiner zylindrischen Außenfläche im Wesentlichen glatt ausgebildet. Hierdurch erhöht sich die Dichtwirkung, da Spaltbildungen oder Ähnliches vermieden werden.

Zum Verspannen der beiden Spannelemente gegeneinander kann es günstig sein, wenn das erste Spannelement mit axialen Gewindeausnehmungen versehen ist, in welche Schrauben eindrehbar sind, die durch zu den Gewindeausnehmungen fluchtende Ausnehmungen des zweiten Spannelements geführt werden. Der gesamte Herstellungsaufwand des erfindungsgemäßen Quetschflansches minimiert sich hierbei beträchtlich.

In einer alternativen Ausgestaltungsvariante ist es auch möglich, das erste und das zweite Spannelement mittels eines Hebelmechanismus gegeneinander zu verspannen. Der Hebelmechanismus kann beispielsweise Zugbolzen, die an dem ersten Spannelement verankert sind, sowie einen Kniehebel oder Ähnliches umfassen. Somit entfällt die Möglichkeit, ein drehmomentüberwachtes Anziehen von axialen Gewindeschrauben vorzunehmen.

Der Quetschflansch kann erfindungsgemäß mit mehreren ersten und mehreren zweiten Spannelementen versehen sein, so dass sich eine gleichmäßige Verspannung des Konuskörpers gegen das Dichtelement ergibt. Die mehreren ersten und zweiten Spannelemente können aufklappbar bzw. scharnierartig miteinander verbunden werden, um die Montage zu erleichtern.

Im Rahmen der Erfindung kann der Konuskörper entweder als ganzer, drehsymmetrischer Konus ausgebildet sein oder lediglich als Teilkonus, der sich nur über einen Teil der Umfangsfläche des entsprechenden Kreisbogens erstreckt. Bei letzterer Lösung ist auch eine exzentrische Abdichtung eines abzudichtenden Rohres in einem Rohr einer Mauerdurchführung oder Ähnlichem besonders sicher und einfach möglich.

Um das Aufstecken des Dichtelements bzw. des Konuskörpers auf ein Rohr zu ermöglichen, kann erfindungsgemäß das Dichtelement mit einem radialen, den Freiraum nicht durchsetzenden Schlitz versehen sein.

Zur Erhöhung der Anpresskraft des zweiten Spannelements kann dieses mit einer axialen Druckfläche, welche beispielsweise im Bereich einer Druckplatte ausgebildet ist, versehen sein.

Um die axiale Zuordnung des ersten und des zweiten Spannelements zu erhöhen, kann es günstig sein, wenn zusätzlich eine Axialführung vorgesehen ist, beispielsweise in Form eines oder mehrerer axialer Bolzen, die in den entsprechenden Ausnehmungen gleiten.

Um eine einfache Anpassung an unterschiedliche Außendurchmesser von abzudichtenden Rohren vornehmen zu können, kann es günstig sein, wenn das Dichtelement mit einer oder mehreren Ausnehmung versehen ist und/oder, um die Ausnehmungen mehrere entnehmbare oder lösbare Ringelemente, ähnlich einem Zwiebelring, angeordnet sind.

Im Folgenden wird die Erfindung anhand eines Ausführungsbeispiels in Verbindung mit der Zeichnung beschrieben. Dabei zeigt:
- Fig. 1: eine perspektivische Darstellung eines erfindungsgemäßen Quetschflansches im montierten Zustand,
- Fig. 2: eine stirnseitige Ansicht auf die in Fig. 1 gezeigte Anordnung,
- Fig. 3: eine Schnittansicht längs der Linie A-A von Fig. 2,
- Fig. 4: eine perspektivische demontierte Ansicht der Ausgestaltung der Fig. 1 bis 3,
- Fig. 5: eine Ansicht des ersten und des zweiten Spannelements im montierten Zustand, und
- Fig. 6: eine Ansicht, ähnlich Fig. 5, im vor-montierten Zustand des Quetschflansches.

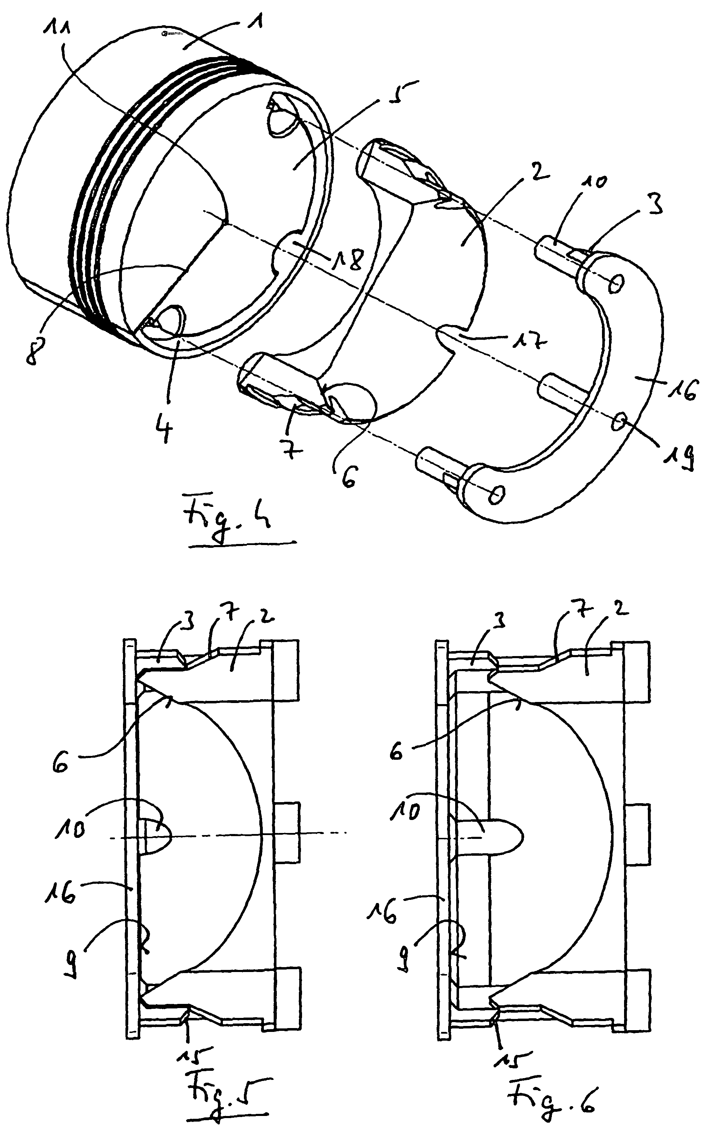

Der erfindungsgemäße Quetschflansch umfasst ein Dichtelement 1, welches im Wesentlichen zylindrisch ausgebildet ist und mit einer zentrischen Ausnehmung 11 versehen ist. Weiterhin ist, wie insbesondere aus Fig. 4 ersichtlich, ein radialer Schlitz 8 vorgesehen, welcher sich von der Außenseite bis zur zentrischen Ausnehmung 11 erstreckt. Der Schlitz 8 dient zum Aufstecken des Dichtelements 1 auf ein Rohr 13, welches mittels des Quetschflansches gegenüber einem nicht dargestellten Futterrohr oder einer zylindrischen Mauerdurchführung abzudichten ist.

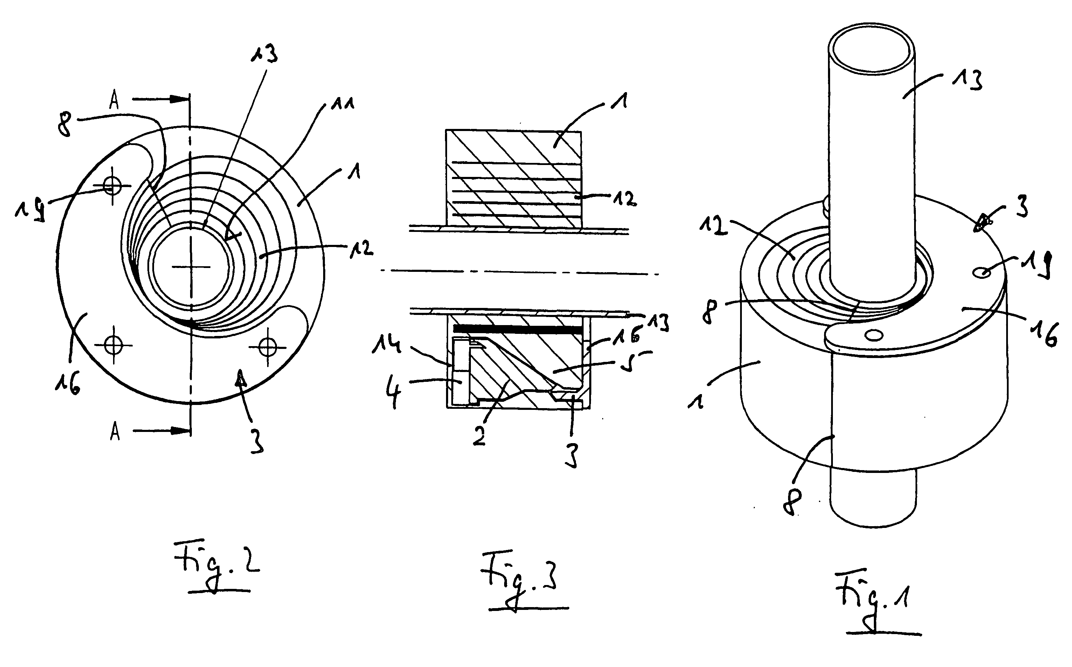

Weiterhin umfasst das erfindungsgemäße Dichtelement 1 einen taschenförmigen Freiraum 4 (siehe insbesondere Fig. 3 und 4), in welchen ein erstes Spannelement 2 einbringbar ist. Der Freiraum 4 ist an einer Stirnseite des Dichtelements 1 mittels einer Stirnwand 14 abgedichtet, diese ist einstückig mit dem Dichtelement 1 ausgebildet.

Der Freiraum 4 kann sich über einen Teil des Kreisumfangs des Dichtelements 1 erstrecken, so wie dies beispielsweise in Fig. 4 dargestellt ist.

Die Außenfläche des Dichtelements 1 ist zylindrisch und vorzugsweise glatt ausgebildet. Es können jedoch auch umlaufende Nuten oder Riefen vorgesehen sein, so wie dies in Fig. 4 dargestellt ist.

Das erste Spannelement 2, welches in den Freiraum 4 einbringbar ist, weist eine innere Konusfläche 6 sowie eine äußere Konusfläche 7 auf. Die Konusflächen sind insbesondere in den Fig. 5 und 6 verdeutlichend dargestellt. Die innere Konusfläche 6 gelangt dabei in Anlage gegen einen Konuskörper 5, welcher angrenzend an den Freiraum 4 einstückig mit dem Dichtelement 1 ausgebildet ist. Durch eine axiale Verspannung des ersten Spannelements 2 erfolgt somit eine Verpressung oder Verspannung/Quetschung des Konuskörpers 5, die zu einer Abdichtung des Rohrs 13 führt (siehe insbesondere Fig. 3).

Die äußere Konusfläche 7 des ersten Spannelements 2 wirkt gegen die Außenwandung des Dichtelements 1 und quetscht dieses in radialer Richtung nach außen (siehe Fig. 3).

Das erste Spannelement 2 wirkt mit einem zweiten Spannelement 3 zusammen, welches eine äußere Konusfläche 15 zum Quetschen des Dichtelements 1 aufweist. Die Fig. 5 und 6 zeigen das Zusammenwirken des ersten und des zweiten Spannelements 2, 3. Dabei zeigt die Fig. 5 eine vollständig gegeneinander verspannte Situation, während in Fig. 6 eine vormontierte Ausgangs-Position dargestellt ist.

Auf die Einfügung des Dichtelements 1 wurde in den Fig. 5 und 6 zum Zwecke der deutlicheren Darstellung verzichtet.

Das zweite Spannelement 3 weist eine Druckplatte 16 auf, welche eine nach innen gerichtete Druckfläche 9 bildet. Diese wirkt gegen den Konuskörper 5 bzw. das Dichtelement 1 und führt zu einer sicheren Verspannung.

Weiterhin sind an dem zweiten Spannelement 3 mehrere Axialführungen 10 (Zylinderstifte) vorgesehen, welche in entsprechenden Ausnehmungen des ersten Spannelements 2 gleiten, um eine axiale Zuordnung sicherzustellen. Diese Ausnehmungen des ersten Spannelements 2 sind mit dem Bezugszeichen 17 versehen. Demgemäß umfasst der Konuskörper 5 ebenfalls axiale Ausnehmungen 18.

Wie sich insbesondere aus der Darstellung der Fig. 3 ergibt, sind im zentrischen Bereich des Dichtelements 1 und/oder des Konuskörpers 5 Ringelemente 12 vorgesehen, welche zwiebelschalenartig ausgebildet sind und entfernt werden können, um eine möglichst exakte Anpassung an den Außendurchmesser des abzudichtenden Rohres 13 vorzunehmen.

Da das erste Spannelement 2 eine innere Konusfläche 6 aufweist, welche eine größere Steigung (Keilform) hat, als die äußere Konusfläche 7, erfolgt eine zuverlässige Quetschung und radiale Deformation des Dichtelements 1, so wie dies beispielsweise aus den Fig. 1 und 2 ersichtlich ist.

In den Figuren wurde auf die Darstellung von Spannschrauben verzichtet. Hierfür sind an dem ersten Spannelement 2 im Bereich der Ausnehmungen 17 bzw. deren Verlängerung Gewindebohrungen vorgesehen. Die entsprechenden Schrauben werden durch Ausnehmungen 19 des zweiten Spannelements 3 von einer Seite des erfindungsgemäßen Quetschflansches aus eingeschraubt. Sie sind somit zur Außenseite hin abgedichtet und für aggressive Medien nicht zugänglich.

### Bezugszeichenliste

- 1: Dichtelement
- 2: Erstes Spannelement
- 3: Zweites Spannelement
- 4: Freiraum
- 5: Konuskörper
- 6: Innere Konusfläche
- 7: Äußere Konusfläche
- 8: Schlitz
- 9: Druckfläche
- 10: Axialführung
- 11: Zentrische Ausnehmung
- 12: Ringelement
- 13: Rohr
- 14: Stirnwand
- 15: Konusfläche
- 16: Druckplatte
- 17: Ausnehmung
- 18: Ausnehmung
- 19: Ausnehmung

## Patentansprüche

1. Quetschflansch mit einem im Wesentlichen ringförmigen elastischen Dichtelement (1) sowie mit einem ersten (2) und einem zweiten (3) Spannelement, mittels derer das Dichtelement (1), des im Wesentlichen zylindrisch ausgebildet ist, quetschbar ist, **dadurch gekennzeichnet, dass** das Dichtelement (1) einen kreisringsegmentartigen innenliegenden, zu einer Stirnfläche des Dichtelements (1) offenen Freiraum (4) umfasst, in welchem ein elastischer Konuskörper (5) angeordnet ist, dass das erste Spannelement (2) kreisringsegmentartig ausgebildet ist und eine innere Konusfläche (6) und eine äußere Konusfläche (7) aufweist und in dem Freiraum (4) liegt und zu dem Konuskörper (5) angeordnet ist und dass das zweite Spannelement (3) kreisringsegmentartig ausgebildet ist und außen liegend, zu dem Konuskörper (5) angeordnet ist, wobei durch die Verspannung des ersten Spannelementes (2) mit dem Konuskörper (5) das Dichtelement (1) gequetscht wird.

2. Quetschflansch nach Anspruch 1, **dadurch gekennzeichnet, dass** der Konuskörper (5) einstückig mit dem Dichtelement (1) verbunden ist.

3. Quetschflansch nach Anspruch 1, **dadurch gekennzeichnet, dass** der Konuskörper (5) als separates Bauelement ausgebildet ist.

4. Quetschflansch nach einem der Ansprüche 1 bis 3, **dadurch gekennzeichnet, dass** das Dichtelement (1) an seiner zylindrischen Außenfläche im Wesentlichen glatt ausgebildet ist.

5. Quetschflansch nach einem der Ansprüche 1 bis 4, **dadurch gekennzeichnet, dass** das erste Spannelement (2) mit mehreren axialen Gewindeausnehmungen und dass das zweite Spannelement (3) mit zu den Gewindeausnehmungen fluchtenden Ausnehmungen (19) versehen ist.

6. Quetschflansch nach einem der Ansprüche 1 bis 4, **dadurch gekennzeichnet, dass** das erste (2) und das zweite (3) Spannelement mittels eines Hebelmechanismus gegeneinander verspannbar sind.

7. Quetschflansch nach einem der Ansprüche 1 bis 6, **dadurch gekennzeichnet, dass** mehrere erste (2) und mehrere zweite (3) Spannelemente vorgesehen sind.

8. Quetschflansch nach einem der Ansprüche 1 bis 7, **dadurch gekennzeichnet, dass** der Konuskörper (5) drehsymmetrisch ausgebildet ist.

9. Quetschflansch nach einem der Ansprüche 1 bis 7, **dadurch gekennzeichnet, dass** der Konuskörper (5) als Teilkonus ausgebildet ist.

10. Quetschflansch nach einem der Ansprüche 1 bis 9, **dadurch gekennzeichnet, dass** das Dichtelement (1) mit einem radialen, den Freiraum (4) nicht durchsetzenden Schlitz (8) versehen ist.

11. Quetschflansch nach einem der Ansprüche 1 bis 10, **dadurch gekennzeichnet, dass** das zweite Spannelement (3) mit einer axialen Druckfläche (9) versehen ist.

12. Quetschflansch nach einem der Ansprüche 1 bis 11, **dadurch gekennzeichnet, dass** das erste (2) und/oder das zweite (3) Spannelement mit zumindest einer Axialführung (10) versehen ist.

13. Quetschflansch nach einem der Ansprüche 1 bis 12, **dadurch gekennzeichnet, dass** das Dichtelement (1) mit einer oder mehreren Ausnehmungen (11) versehen ist.

14. Quetschflansch nach Anspruch 13, **dadurch gekennzeichnet, dass** das Dichtelement (1) um seine zentrische Ausnehmung (11) mit mehreren entnehmbaren Ringelementen (12) versehen ist.

15. Quetschflansch nach einem der Ansprüche 3 bis 14, **dadurch gekennzeichnet, dass** der Konuskörper (5) aus einem gleitfähigen Elastomer besteht.

## Claims

1. Compressible flange having a substantially ringshaped elastic sealing element (1) and a first (2) and a second (3) clamping element, by means of which the sealing element (1), which is designed substantially cylindrical, is compressible, **characterised in that** the sealing element (1) encompasses a circular segment-shaped internally situated free space (4) open to an end face of the sealing element (1) in which an elastic conical body (5) is arranged, that the first clamping element (2) is designed circular segment-shaped and has an inner conical surface (6) and an outer conical surface (7) and lies within the free space (4) and is arranged towards the conical body (5) and that the second clamping element (3) is designed circular segment-shaped and is arranged lying externally towards the conical body (5), whereby due to the tensioning of the first clamping element (2), the sealing element (1) is compressed with the conical body (5).

2. Compressible flange according to claim 1, **characterised in that** the conical body (5) is linked in one piece to the sealing element (1).

3. Compressible flange according to claim 1, **characterised in that** the conical body (5) is designed as a separate component.

4. Compressible flange according to one of the claims 1 to 3, **characterised in that** the sealing element (1) is designed substantially smooth on its cylindrical outer surface.

5. Compressible flange according to one of the claims 1 to 4, **characterised in that** the first clamping element (2) is provided with a plurality of axial threaded cut-outs and the second clamping element (3) is provided with cut-outs (19) aligning with the threaded cut-outs.

6. Compressible flange according to one of the claims 1 to 4, **characterised in that** the first (2) and the second (3) clamping element may be clamped against one another by means of a lever mechanism.

7. Compressible flange according to one of the claims 1 to 6, **characterised in that** a plurality of first (2) and a plurality of second (3) clamping elements are provided.

8. Compressible flange according to one of the claims 1 to 7, **characterised in that** the conical body (5) is designed rotationally symmetrical.

9. Compressible flange according to one of the claims 1 to 7, **characterised in that** the conical body (5) is designed as a partial cone.

10. Compressible flange according to one of the claims 1 to 9, **characterised in that** the sealing element (1) is provided with a radial slot (8) not passing through the free space (4).

11. Compressible flange according to one of the claims 1 to 10, **characterised in that** the second clamping element (3) is provided with an axial pressure surface (9).

12. Compressible flange according to one of the claims 1 to 11, **characterised in that** the first (2) and/or the second (3) clamping element is provided with at least one axial guide (10).

13. Compressible flange according to one of the claims 1 to 12, **characterised in that** the sealing element (1) is provided with one or more cut-outs (11).

14. Compressible flange according to claim 13, **characterised in that** the sealing element (1) is provided with a plurality of removable ring elements (12) about its central cut-out (11).

15. Compressible flange according to one of the claims 3 to 14, **characterised in that** the conical body (5) comprises a slidable elastomer.

## Revendications

1. Bride de serrage ayant un élément d'étanchéité élastique sensiblement circulaire (1), ainsi qu'un premier (2) et un deuxième (3) éléments de contrainte au moyen desquels l'élément d'étanchéité (1), qui est réalisé de façon sensiblement cylindrique, peut être serré, **caractérisée en ce que** l'élément d'étanchéité (1) comprend un espace libre (4) similaire à un segment d'un anneau de cercle, situé à l'intérieur, ouvert en direction d'une surface frontale de l'élément d'étanchéité (1), dans lequel est agencé un corps conique élastique (5), **en ce que** le premier élément de contrainte (2) est réalisé de façon similaire à un segment d'un anneau de cercle, présente une surface conique intérieure (6) et une surface conique extérieure (7), se situe dans l'espace libre (4) et est agencé sur le composant conique (5), et **en ce que** le deuxième élément de contrainte (3) est réalisé de façon similaire à un segment d'un anneau de cercle et est agencé dans une position extérieure sur le composant conique (5), l'élément d'étanchéité (1) étant serré par la déformation du premier élément de contrainte (2) avec le corps conique (5).

2. Bride de serrage selon la revendication 1, **caractérisée en ce que** le corps conique (5) est relié d'une seule pièce avec l'élément d'étanchéité (1).

3. Bride de serrage selon la revendication 1, **caractérisée en ce que** le corps conique (5) est réalisé en tant que composant séparé.

4. Bride de serrage selon l'une quelconque des revendications 1 à 3, **caractérisée en ce que** l'élément d'étanchéité (1) est réalisé de façon sensiblement lisse sur sa surface extérieure cylindrique.

5. Bride de serrage selon l'une quelconque des revendications 1 à 4, **caractérisée en ce que** le premier élément de contrainte (2) est muni de plusieurs évidements de filetage axiaux et le deuxième élément de contrainte (3) d'évidements (19) en alignement avec les évidements de filetage.

6. Bride de serrage selon l'une quelconque des revendications 1 à 4, **caractérisée en ce que** le premier (2) et le deuxième (3) éléments de contrainte peuvent être déformés l'un contre l'autre au moyen d'un mécanisme à levier.

7. Bride de serrage selon l'une quelconque des revendications 1 à 6, **caractérisée en ce que** plusieurs premiers (2) et plusieurs deuxièmes (3) éléments de contrainte sont prévus.

8. Bride de serrage selon l'une quelconque des revendications 1 à 7, **caractérisée en ce que** le corps conique (5) est réalisé de façon symétrique en rotation.

9. Bride de serrage selon l'une quelconque des revendications 1 à 7, **caractérisée en ce que** le corps conique (5) est réalisé en tant que cône tronqué.

10. Bride de serrage selon l'une quelconque des revendications 1 à 9, **caractérisée en ce que** l'élément d'étanchéité (1) est muni d'une fente (8) radiale ne traversant pas l'espace libre (4).

11. Bride de serrage selon l'une quelconque des revendications 1 à 10, **caractérisée en ce que** le deuxième élément de contrainte (3) est muni d'une surface de pression axiale (9).

12. Bride de serrage selon l'une quelconque des revendications 1 à 11, **caractérisée en ce que** le premier (2) et/ou le deuxième (3) élément de contrainte est muni d'au moins un guide axial (10).

13. Bride de serrage selon l'une quelconque des revendications 1 à 12, **caractérisée en ce que** l'élément d'étanchéité (1) est muni d'un ou de plusieurs évidements (11).

14. Bride de serrage selon la revendication 13, **caractérisée en ce que** l'élément d'étanchéité (1) est muni de plusieurs éléments circulaires amovibles (12) autour de son évidement central (11).

15. Bride de serrage selon l'une quelconque des revendications 3 à 14, **caractérisée en ce que** le composant conique (5) est constitué d'un élastomère adhésif.
